# EUROPÄISCHE PATENTSCHRIFT

(11) **EP 4 126 597 B1**
(45) Veröffentlichungstag und Bekanntmachung des Hinweises auf die Patenterteilung: **29.05.2024**
(21) Anmeldenummer: 21736587.3
(22) Anmeldetag: 24.06.2021
(51) Int. Cl.: B60R 11/02, B60R 13/04, B60R 13/10

(54) **EINE ANZEIGEANORDNUNG MIT TRANSPARENTER ABDECKUNG UND DARAN VERBESSERT FESTGELEGTER PIXELMATRIXANZEIGE SOWIE ZUGEHÖRIGES MONTAGEVERFAHREN**
A DISPLAY ASSEMBLY WITH TRANSPARENT COVER AND PIXEL MATRIX DISPLAY FIXED THERETO IN AN IMPROVED MANNER, AND ASSOCIATED MOUNTING METHOD
ENSEMBLE D'AFFICHAGE AYANT UN COUVERCLE TRANSPARENT ET UN AFFICHEUR À MATRICE DE PIXELS FIXÉ À CELUI-CI D'UNE MANIÈRE AMÉLIORÉE, ET PROCÉDÉ DE MONTAGE ASSOCIÉ

(30) Priorität: 08.07.2020 DE 102020118044
(43) Veröffentlichungstag der Anmeldung: 08.02.2023
(73) Patentinhaber: Preh GmbH, 97616 Bad Neustadt a.d. Saale (DE)
(72) Erfinder: SCHMIDT, Thomas, 36088 Hünfeld (DE); MARTIN, Michael, 97618 Unsleben (DE)
(74) Vertreter: Lohmanns, Bernard
(86) Internationale Anmeldenummer: PCT/EP2021/067399
(87) Internationale Veröffentlichungsnummer: WO 2022/008260

(56) Entgegenhaltungen:
- EP-A1- 3 150 442
- EP-A1- 3 243 703
- EP-A1- 3 473 498
- WO-A1-2010/115585
- WO-A1-2018/222978
- DE-A1-102016 215 299
- US-A1- 2013 265 504
- US-A1- 2019 001 637

## Beschreibung

Die Erfindung betrifft eine Anzeigeanordnung aus einer transparenten Abdeckung und einer Pixelmatrixanzeige, welche aus Sicht des Betrachters darunter angeordnet ist, insbesondere zur Verwendung bei einem Kraftfahrzeug, beispielsweise im Außenbereich einer Kraftfahrzeugkarosserie. Bei unter einer transparenten Abdeckung angeordneten Pixelmatrixanzeigen besteht regelmäßig das Problem, dass die Anzeigefläche der Pixelmatrixanzeige möglichst unter Vermeidung reflexionenerzeugender Grenzflächen an die Anzeigefläche angrenzend anzuordnen ist. Beispielsweise ist eine Luftschicht zwischen der Abdeckung und der Anzeigefläche zu vermeiden, da die Grenzflächen vom optisch dichteren zum optisch dünneren Medium und umgekehrt jeweils Reflexionen hervorrufen, die die Betrachtung aus Sicht des Bedieners beeinträchtigen. Aus diesem Grund wird die Anzeigefläche regelmäßig über eine Schicht, wie eine Klebeschicht, welche einen zum Material der Abdeckung identischen oder annähernd identischen optischen Brechungsindex aufweist, an die Abdeckung angekoppelt. Dabei geht der mechanische Vorteil der Luftschicht verloren, welche die Pixelmatrixanzeige gegenüber mechanischer Einwirkung zumindest weitgehend entkoppelt, da der Klebstoff in der Regel schlagfest aushärtet. Da ferner die Ankoppelung meist mit einem Flüssigklebstoff erfolgt, treten immer wieder insoweit Schwierigkeiten auf, dass Verluste an Flüssigklebstoff zu einer nicht gleichmäßigen Ausbildung der Klebstoffschicht führen. Bei einer direkten Ankoppelung der Anzeigefläche der Pixelmatrixanzeige an die Abdeckung, besteht die Gefahr bei einer Krafteinwirkung auf die Abdeckung, wenn sich die Pixelmatrixanzeige im Kraftverlauf befindet und es so zu einer irreversiblen Beschädigung der Pixelmatrixanzeige kommt. Die EP3243703A1 offenbart ein Verfahren nach dem Oberbegriff von Anspruch 1, sowie eine Vorrichtung nach dem Oberbegriff von Anspruch 12.

Vor diesem Hintergrund bestand Bedarf nach einer gattungsgemäßen Anzeigeanordnung, die den Vorteil einer reflexionsfreien optischen Ankopplung zwischen Abdeckung und Anzeigefläche einer zugehörigen Pixelmatrixanzeige aufweist, aber gleichzeitig für eine zuverlässige Befestigung durch eine gleichmäßige Klebstoffschicht gesorgt ist und die Pixelmatrixanzeige andererseits nicht der erhöhten Gefahr einer mechanischen Beschädigung ausgesetzt ist.

Entsprechend bestand Bedarf nach einem zugehörigen Montageverfahren, mit dem eine solche Anzeigeanordnung zu realisieren ist. Diese Aufgabe wird durch ein Montageverfahren gemäß Anspruch 1 beziehungsweise eine Anzeigeanordnung des nebengeordneten Anspruchs gelöst. Eine gleichermaßen vorteilhafte Verwendung ist Gegenstand des Verwendungsanspruchs. Vorteilhafte Ausgestaltungen sind jeweils Gegenstand der abhängigen Ansprüche. Es ist darauf hinzuweisen, dass die in den Ansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft ein Verfahren zur Montage einer Anzeigeanordnung, bei dem in einem Anordnungsschritt ein Trägerrahmen und eine zumindest bereichsweise transparente Abdeckung so angeordnet werden, dass der Trägerrahmen unter Ausbildung eines einen Hohlraum definierenden Zwischenraums, welcher durch den Trägerrahmen und die Abdeckung begrenzt ist, an die Abdeckung angrenzt. Gleichzeitig bilden die Abdeckung und der Trägerrahmen eine Wanne zur Aufnahme einer eine Anzeigefläche aufweisenden Pixelmatrixanzeige aus. Bevorzugt erstreckt sich der den Hohlraum bildende Zwischenraum um die Wanne und umschließt diese noch bevorzugter vollständig. Beispielsweise weist der Trägerrahmen einen zentralen Durchbruch auf, so dass der den Durchbruch umlaufend umgebende Trägerrahmen die dem Durchbruch zugewandte Innenwand der Wanne definiert. Beispielsweise wird ein Boden der Wanne durch die Abdeckung ausgebildet. Bevorzugt ist der Trägerrahmen aus einem faserverstärkten Kunststoff, bevorzugter aus einem faserverstärkten Thermoplast ausgebildet.

Erfindungsgemäß ist der Trägerrahmen zur Festlegung der Anzeigeanordnung an einer tragenden Konstruktion, insbesondere an einer Kraftfahrzeugkarosserie, ausgebildet. Beispielsweise weist der Trägerrahmen Rastmittel oder Mittel zur Schraubbefestigung, wie Durchbrüche oder Gewindebohrungen auf.

In einem nachfolgenden Schritt erfolgt ein Einspritzen eines thermoplastischen Elastomers in den durch den Zwischenraum definierten Hohlraum, um diesem mit dem thermoplastischen Elastomer zu füllen, bevorzugt vollständig zu verfüllen. Durch nachfolgendes Verfestigen des thermoplastischen Elastomers wird der Trägerrahmen an der Abdeckung durch stoffschlüssige Verbindung festgelegt, während eine nach dem Verfestigen dauerhaft verbleibende Restelastizität für eine dauerhafte und robuste Verbindung mit Dichtwirkung zwischen der Abdeckung und dem Trägerrahmen sorgt.

In einem nachfolgenden Schritt folgt ein Füllen der Wanne mit einem transparent härtenden Flüssigklebstoff unter Ausbildung einer Klebstoffschicht, wobei spätestens die dichtende Wirkung des thermoplastischen Elastomers im Hohlraum ein Verlust an Flüssigklebstoff verhindert. Bevorzugt handelt es sich um einen Flüssigklebstoff auf Acrylatbasis oder um einen 2-Komponenten-Silikon-Klebstoff.

Bevorzugt benetzt beim Füllen der Wanne mit dem Flüssigklebstoff der Flüssigklebstoff den Trägerrahmen, insbesondere die durch ihn ausgebildete Innenwand der Wanne, bevorzugt wird die Innenwand der Wanne allseitig vom Flüssigklebstoff benetzt. Beispielsweise ist die Menge des eingebrachten Flüssigklebstoffs so gewählt, dass beim, gegebenenfalls selbstständigen, Verteilen des Flüssigklebstoffs in der Wanne ein im Wesentlichen gleichmäßiger Füllstand in der Wanne unter allseitiger Benetzung der Innenwand der Wanne erreicht ist.

Nachfolgend erfolgt erfindungsgemäß ein Einbringen der Pixelmatrixanzeige in die Wanne, wobei die Anzeigefläche der Pixelmatrixanzeige Klebstoffschicht zugewandt ist, und von dem Flüssigklebstoff der Klebstoffschicht vollflächig benetzt wird. Dieses benetzen kann beispielsweise bei Verwendung eines polaren Flüssigklebstoffs elektrostatisch unterstützt werden. In einem nachfolgenden Schritt erfolgt ein Härten des Klebstoffs. Darunter wird ein chemisches und/oder physikalisches Härten des Klebstoffs, wie eine zunehmende Vernetzung des Klebstoffs verstanden. Beispielsweise handelt es sich um einen strahlenhärtenden Klebstoff, wie einen UV-härtenden Klebstoff, so dass der Klebstoff mittels entsprechender Bestrahlung durch die Abdeckung hindurch gehärtet wird.

Durch das Härten wird erreicht, dass die Pixelmatrixanzeige über die Anzeigefläche an der Abdeckung festgelegt ist, während aufgrund der Transparenz der Abdeckung und der dazwischen liegenden Schichten, wie der Klebstoffschicht, die Anzeigefläche durch die Abdeckung und die Klebstoffschicht sichtbar bleibt. Bevorzugt ist die Pixelmatrixanzeige ausschließlich über die Anzeigefläche festgelegt, d.h. ist somit "freihängend" an der Abdeckung festgelegt. Hinsichtlich der Pixelmatrixanzeige ist die Erfindung nicht eingeschränkt. Es handelt sich beispielsweise um einen sogenannten Touchscreen, also eine Kombination aus Pixelmatrixanzeige und einer ortsauflösenden Berührsensorik, wie eine kapazitiven, ortsauflösenden Berührsensorik. Beispielsweise handelt es sich bei der Pixelmatrixanzeige um eine Flüssigkristallanzeige in Twisted Nematic Aufbau, Super-Twisted Nematic Aufbau, Double Super-Twisted Nematic Aufbau, Triple Super-Twisted Nematic Aufbau, Vertical Alignment Aufbau oder In-Plane Switching Aufbau. Die Anzeigefläche ist jeweils Bestandteil der äußeren Oberfläche der Pixelmatrixanzeige und wird beispielsweise von der äußersten Schicht der üblicherweise im Schichtaufbau realisierten Pixelmatrixanzeige definiert. Je nach Bauweise ist dies beispielsweise eine elektrodentragende, transparente Deckschicht oder eine transparente Schutzschicht oder Dergleichen. Alternativ kann die zur ortsaufgelösten, kapazitiven Berührdetektion vorgesehene transparente Elektrodenstruktur auch Bestandteil der Abdeckung sein und beispielsweise auf der der Pixelmatrixanzeige zugewandten Oberfläche aufgebracht sein.

Dadurch, dass der Trägerrahmen der Festlegung der Anzeigeanordnung an einer tragenden Konstruktion dient, wird bei einer Krafteinwirkung auf die Abdeckung dafür gesorgt, dass die Pixelmatrixanzeige außerhalb des Kraftflusses angeordnet ist. Es wird ein mechanisches Einspannen der Pixelmatrixanzeige zwischen der Abdeckung und einer tragenden Konstruktion, wie der Kraftfahrzeugkarosserie verhindert. Damit ist die Gefahr einer Beschädigung der Pixelmatrixanzeige weitgehend minimiert. Dies gilt umso mehr, wenn gemäß einer bevorzugten Ausgestaltung der Trägerrahmen exklusiv der Festlegung der Anzeigeanordnung an der tragenden Konstruktion dient.

In einem dem Härten nachfolgenden Schritt wird gemäß einer bevorzugten Ausführungsform des erfindungsgemäßen Verfahrens ein die Pixelmatrixanzeige übergreifendes Gehäuse an dem Trägerrahmen festgelegt, also es wird ein Berührkontakt zwischen der Pixelmatrixanzeige und dem Gehäuse vermieden. Das Gehäuse dient dem mechanischen Schutz der Pixelmatrixanzeige. Um das Eindringen von Fremdkörpern oder Fluiden zu vermeiden, ist gemäß einer bevorzugten Ausgestaltung zwischen dem Gehäuse und dem Trägerrahmen ein Dichtmittel vorgesehen. Das Dichtmittel ist beispielsweise ein Kautschukmaterial, ein natürliches Gummimaterial oder ein thermoplastisches Elastomer.

Zur erleichterten Montage wird gemäß einer bevorzugten Variante des Montageverfahrens das Gehäuse durch Verrasten von Rastmitteln am Trägerrahmen festgelegt.

Gemäß einer bevorzugten Variante des erfindungsgemäßen Verfahrens wird wenigstens ein weiteres Zier- und/oder Befestigungselement, das beispielsweise der Festlegung weiterer Komponenten an der Abdeckung dient oder auch zur Festlegung der Anzeigeanordnung an einer tragenden Konstruktion vorgesehen ist, außerhalb der Wanne mittels einer beim Einspritzen und Verfestigen ausgebildeten Schicht aus dem thermoplastischen Elastomer an der Abdeckung festgelegt.

Die Abdeckung ist beispielsweise eine Schicht aus einem transparenten Kunststoff, wie einem Thermoplast, bevorzugt weist die Abdeckung einen Glaswerkstoff auf. Noch bevorzugter ist die Abdeckung ein Einscheibensicherheitsglas, d.h. ein Temperglas nach EN 12150-1, oder ein Verbundglas. Bei Letzterem handelt es sich um einen Verbund aus zwei oder mehr Flachglasscheiben, welche durch eine Kunststofffolie, üblicherweise eine vergleichsweise reißfeste und zähelastische Folie, verbunden sind.

Gemäß einer bevorzugten Ausführungsform des Verfahrens ist der Trägerrahmen aus einem Kunststoff, wie einem Thermoplast, bevorzugt einem faserverstärkten Kunststoff, hergestellt. Bevorzugt wird der Trägerrahmen in einem vorgeschalteten Schritt in einem Spritzformverfahren, bevorzugt in einem 2K-Spritzformverfahren, hergestellt. Beispielsweise werden der Trägerrahmen und das Dichtmittel in einem gemeinsamen formgebenden 2K-Spritzformschritt unter Herstellung einer stoffschlüssigen Verbindung zwischen beiden extrudiert.

Bei einer bevorzugten Ausführungsform des erfindungsgemäßen Verfahrens wird in einem letzten Schritt der Trägerrahmen an einer Kraftfahrzeugkarosserie festgelegt, wobei in der festgelegten Stellung die Pixelmatrixanzeige keinen Berührkontakt mit der Kraftfahrzeugkarosserie aufweist.

Die Erfindung betrifft ferner eine Anzeigeanordnung, welche eine zumindest bereichsweise transparente Abdeckung aufweist. Die Abdeckung ist beispielsweise eine Schicht aus einem transparenten Kunststoff, wie einem Thermoplast, bevorzugt weist die Abdeckung einen Glaswerkstoff auf. Noch bevorzugter ist die Abdeckung ein Einscheibensicherheitsglas, d.h. ein Temperglas nach EN 12150-1, oder ein Verbundglas. Bei Letzterem handelt es sich um einen Verbund aus zwei oder mehr Flachglasscheiben, welche durch eine Kunststofffolie, üblicherweise eine vergleichsweise reißfeste und zähelastische Folie, verbunden sind.

Die erfindungsgemäße Anzeigeanordnung weist ferner ein Trägerrahmen zur Festlegung der Anzeigeanordnung an einer tragenden Konstruktion, insbesondere an einer Kraftfahrzeugkarosserie, auf. Bevorzugt ist der Trägerrahmen aus einem faserverstärkten Kunststoff, bevorzugter aus einem faserverstärkten Thermoplast ausgebildet. Erfindungsgemäß ist der Trägerrahmen zur Festlegung der Anzeigeanordnung an einer tragenden Konstruktion, insbesondere an einer Kraftfahrzeugkarosserie, ausgebildet. Beispielsweise weist der Trägerrahmen Rastmittel oder Mittel zur Schraubbefestigung, wie Durchbrüche oder Gewindebohrungen auf.

Die erfindungsgemäße Anzeigeanordnung weist ferner eine eine Anzeigefläche aufweisende Pixelmatrixanzeige auf. Hinsichtlich der Pixelmatrixanzeige ist die Erfindung nicht eingeschränkt. Es handelt sich beispielsweise um einen sogenannten Touchscreen, also eine Kombination aus Pixelmatrixanzeige und einer ortsauflösenden Berührsensorik, wie eine kapazitiven, ortsauflösenden Berührsensorik. Beispielsweise handelt es sich bei der Pixelmatrixanzeige um eine Flüssigkristallanzeige in Twisted Nematic Aufbau, Super-Twisted Nematic Aufbau, Double Super-Twisted Nematic Aufbau, Triple Super-Twisted Nematic Aufbau, Vertical Alignment Aufbau oder In-Plane Switching Aufbau. Die Anzeigefläche ist jeweils Bestandteil der äußeren Oberfläche der Pixelmatrixanzeige und wird beispielsweise von der äußersten Schicht der üblicherweise im Schichtaufbau realisierten Pixelmatrixanzeige definiert. Je nach Bauweise ist dies beispielsweise eine elektrodentragende, transparente Deckschicht oder eine transparente Schutzschicht oder Dergleichen. Alternativ kann die zur ortsaufgelösten, kapazitiven Berührdetektion vorgesehene transparente Elektrodenstruktur auch Bestandteil der Abdeckung sein und beispielsweise auf der der Pixelmatrixanzeige zugewandten Oberfläche aufgebracht sein.

Die erfindungsgemäße Anzeigeanordnung weist optional ein Gehäuse auf.

Erfindungsgemäß ist der Trägerrahmen angrenzend an die Abdeckung angeordnet. Dabei wird ein durch den Trägerrahmen und die Abdeckung begrenzter Zwischenraum ausgebildet, welcher mit einem thermoplastischen Elastomer gefüllt, bevorzugt vollständig verfüllt ist, um den Trägerrahmen an der Abdeckung festzulegen. Ferner bilden die Abdeckung und der Trägerrahmen eine Wanne zur Aufnahme der Pixelmatrixanzeige aus. Beispielsweise weist der Trägerrahmen einen zentralen Durchbruch auf, so dass der den Durchbruch umlaufend umgebende Trägerrahmen die dem Durchbruch zugewandte Innenwand der Wanne definiert. Beispielsweise wird ein Boden der Wanne durch die Abdeckung ausgebildet. Bevorzugt erstreckt sich der Zwischenraum um die Wanne, bevorzugter umschließt der Zwischenraum die Wanne vollständig.

Erfindungsgemäß ist in der Wanne eine transparente Klebstoffschicht zwischen der Anzeigefläche und der Abdeckung ausgebildet, um die Pixelmatrixanzeige an der Abdeckung festzulegen, wobei die Anzeigefläche durch die Abdeckung und die Klebstoffschicht sichtbar ist. Bevorzugt ist die Pixelmatrixanzeige lediglich über ihre Anzeigefläche befestigt und somit freihängend an der Abdeckung festgelegt. Das optionale Gehäuse, sofern vorhanden, ist dabei die Pixelmatrixanzeige übergreifend am Trägerrahmen festgelegt.

Dadurch, dass der Trägerrahmen der Festlegung der Anzeigeanordnung an einer tragenden Konstruktion dient, wird bei einer Krafteinwirkung auf die Abdeckung dafür gesorgt, dass die Pixelmatrixanzeige außerhalb des Kraftflusses angeordnet ist. Es wird ein mechanisches Einspannen der Pixelmatrixanzeige zwischen der Abdeckung und einer tragenden Konstruktion, wie der Kraftfahrzeugkarosserie verhindert. Die Gefahr einer Beschädigung der Pixelmatrixanzeige wird minimiert. Dies gilt umso mehr, wenn gemäß einer bevorzugten Ausgestaltung der Trägerrahmen exklusiv der Festlegung an der tragenden Konstruktion dient.

Bei einer bevorzugten Ausführungsform der Anzeigeanordnung ist zwischen dem Gehäuse und dem Trägerrahmen ein Dichtmittel vorgesehen. Das Dichtmittel ist beispielsweise ein Kautschukmaterial, ein natürliches Gummimaterial oder ein thermoplastisches Elastomer.

Gemäß einer bevorzugten Ausführungsform der erfindungsgemäßen Anzeigeanordnung ist ferner wenigstens ein außerhalb der Wanne angeordnetes, weiteres Zier- und/oder Befestigungselement vorgesehen, welches mittels einer Schicht aus thermoplastischem Material an der Abdeckung festgelegt ist.

Beispielsweise dient dieses weitere Zier- und/oder Befestigungselement neben dem Trägerrahmen der Befestigung der Anzeigeanordnung an einer tragenden Konstruktion, insbesondere an einer Kraftfahrzeugkarosserie oder dient der Festlegung einer anderen Komponente an der Abdeckung.

Bevorzugt ist vorgesehen, dass die Klebstoffschicht an den Trägerrahmen, bevorzugter an die die Innenwand der Wanne ausbildende Oberfläche, bevorzugt allseitig, angrenzt.

Gemäß einer bevorzugten Variante der erfindungsgemäßen, das optionale Gehäuse beinhaltenden Anzeigeanordnung ist das optionale Gehäuse durch Rastmittel am Trägerrahmen festgelegt.

Die Erfindung betrifft ferner die vorteilhafte Verwendung der Anzeigeanordnung in einer der beschriebenen Ausführungsformen an einem Kraftfahrzeug, insbesondere in einem Außenbereich der Kraftfahrzeugkarosserie. Bevorzugt ist die Anzeigeanordnung neben einer Karosserieöffnung, beispielsweise einer Tür, wie in einer B-Säule des Kraftfahrzeugs angeordnet.

Die Erfindung wird anhand der nachfolgenden Figuren näher erläutert. Die Figuren sind dabei nur beispielhaft zu verstehen und stellen jeweils lediglich eine bevorzugte Ausführungsvariante dar. Es zeigen:
- Fig. 1: eine schematische Schnittansicht einer Ausführungsform der erfindungsgemäßen Anzeigeanordnung;
- Fig. 2: eine schematische Schnittansicht zur Erläuterung der Anordnung des Trägerrahmens auf der Abdeckung und des Einbringens des thermoplastischen Elastomers gemäß dem erfindungsgemäßen Montageverfahren;
- Fig. 3: eine schematische Schnittansicht zur Erläuterung des Füllens der Wanne mit einem Flüssigklebstoff gemäß dem erfindungsgemäßen Montageverfahren;
- Fig. 4: eine schematische Schnittansicht zur Erläuterung des Verklebens der Pixelmatrixanzeige mit der Abdeckung gemäß dem erfindungsgemäßen Montageverfahren;
- Fig. 5: eine schematische Schnittansicht zur Erläuterung des Festlegens des Gehäuses mit dem Trägerrahmen gemäß dem erfindungsgemäßen Montageverfahren.

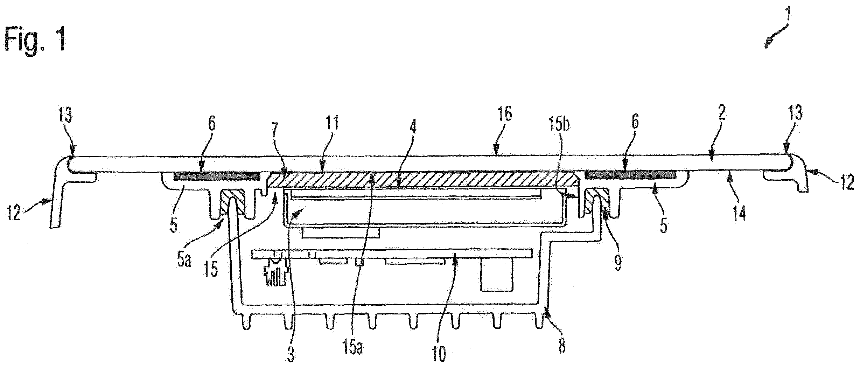

Figur 1 zeigt eine Ausführungsform der erfindungsgemäßen Anzeigeanordnung 1. Diese weist eine zumindest bereichsweise transparente Abdeckung 2 auf. Die Abdeckung 2 ist ein Einscheibensicherheitsglas, d.h. ein Temperglas nach EN 12150-1, oder ein Verbundglas. Bei Letzterem handelt es sich um einen Verbund aus zwei oder mehr Flachglasscheiben, welche durch eine Kunststofffolie verbunden sind. Die Abdeckung 2 wird im Bereich der B-Säule an einem nicht dargestellten Kraftfahrzeug montiert, wobei die Fläche 16 der Abdeckung 2 eine äußere Fläche des Kraftfahrzeugs definiert und die Fläche 14 der Abdeckung 2 der Karosserie bzw. dem Fahrzeuginnenraum zugewandt ist. Die erfindungsgemäße Anzeigeanordnung 1 weist ferner ein Trägerrahmen 5 zur Festlegung der Anzeigeanordnung 1 an der Kraftfahrzeugkarosserie auf. Der Trägerrahmen 4 ist aus einem faserverstärkten Thermoplast ausgebildet und weist nicht näher dargestellte Mittel zur Festlegung an der Kraftfahrzeugkarosserie, wie Rastmittel oder Mittel zur Schraubbefestigung, wie Durchbrüche oder Gewindebohrungen auf.

Die erfindungsgemäße Anzeigeanordnung 1 weist ferner eine eine Anzeigefläche 4 aufweisende Pixelmatrixanzeige 3 auf. Hinsichtlich der verwendeten Technologie der Bilderzeugung der Pixelmatrixanzeige 3 ist die Erfindung nicht eingeschränkt. Die Anzeigefläche 4 ist jeweils Bestandteil der äußeren Oberfläche der Pixelmatrixanzeige 3 und wird beispielsweise von der äußersten Schicht der üblicherweise im Schichtaufbau realisierten Pixelmatrixanzeige 3 definiert. Eine zur ortsaufgelösten, kapazitiven Berührdetektion vorgesehene transparente Elektrodenstruktur 11 ist Bestandteil der Abdeckung 2 und ist als Beschichtung eines Foliensubstrats auf der der Pixelmatrixanzeige 3 zugewandten Oberfläche 14 der innersten, dem Fahrzeug zugewandten Glasschicht der Abdeckung 2 aufgebracht.

Die erfindungsgemäße Anzeigeanordnung 1 weist ferner ein Gehäuse 8 auf, welches die Pixelmatrixanzeige 3 und eine auf einer Leiterplatte 10 angeordnete Auswertelektronik übergreifend ausgebildet ist und welches über die Dichtmittel 9 und nicht gezeigte Rastmittel an dem Trägerrahmen 5 festgelegt ist. Dazu ist eine Nut 5a im Trägerrahmen 5 ausgebildet, in den das Gehäuse 8 eingreift. Der Trägerrahmen 5 seinerseits ist angrenzend an die Abdeckung 2 nämlich angrenzend an die der Pixelmatrixanzeige 3 zugewandte Oberfläche 14 der Abdeckung 2 angeordnet. Dabei wird ein durch den Trägerrahmen 5 und die Abdeckung 2 begrenzter Zwischenraum 6 ausgebildet, welcher mit einem thermoplastischen Elastomer gefüllt, bevorzugt vollständig verfüllt ist, um den Trägerrahmen 5 an der Abdeckung 2 festzulegen. Die Abdeckung 2 und der Trägerrahmen 5 bilden eine Wanne 15 zur Aufnahme der Pixelmatrixanzeige 3 aus. So weist der Trägerrahmen 5 einen zentralen Durchbruch auf, wobei der den Durchbruch umlaufend umgebende Trägerrahmen 5 eine dem Durchbruch zugewandte Innenwand 15b der Wanne 15 definiert. Der Boden 15a der Wanne 15 wird durch die Abdeckung 2 ausgebildet. Der mit dem thermoplastischen Elastomer verfüllte Zwischenraum 6 erstreckt sich um die Wanne 15, so dass diese vom Zwischenraum 6 vollständig umschlossen ist und abdichtend wirkt, um das Eindringen von Fluid in die Wanne 15 und der dort befindlichen Pixelmatrixanzeige 3 zu verhindern.

In der Wanne 15 ist eine transparente Klebstoffschicht 7 zwischen der Anzeigefläche 4 der Pixelmatrixanzeige 3 und der Abdeckung 2 ausgebildet, um die Pixelmatrixanzeige 3 an der Abdeckung 2 stoffschlüssig festzulegen, wobei die Anzeigefläche 4 durch die Abdeckung 2 und die Klebstoffschicht 7 aufgrund deren optischer Transparenz sichtbar ist. Die Klebstoffschicht 7 erstreckt sich vollflächig über die Anzeigefläche 4 zwischen den gegenüberliegenden Innenwänden 15b der Wanne 15. Dabei ist die Pixelmatrixanzeige 3 lediglich über ihre Anzeigefläche 4 befestigt und somit freihängend an der Abdeckung 2 festgelegt.

Dadurch, dass der Trägerrahmen 5 der Festlegung der Anzeigeanordnung 1 an der tragenden Konstruktion, hier der Fahrzeugkarosserie, dient, wird bei einer Krafteinwirkung auf die Abdeckung 2 dafür gesorgt, dass die Pixelmatrixanzeige 3 außerhalb des Kraftflusses angeordnet ist. Es wird ein mechanisches Einspannen der Pixelmatrixanzeige 3 zwischen der Abdeckung und der tragenden Konstruktion, wie der Kraftfahrzeugkarosserie, verhindert. Somit ist eine Beschädigung der Pixelmatrixanzeige 3 weitgehend ausgeschlossen.

Neben dem Trägerrahmen 5 sind ferner außerhalb der Wanne 15 angeordnete, weitere Zier- und/oder Befestigungselemente 12 vorgesehen, welches mittels einer Schicht 13 ebenfalls aus thermoplastischem Material an der Abdeckung 2 festgelegt sind. Diese Zier- und/oder Befestigungselemente 12 dienen hier der Spaltverblendung an der B-Säule des Kraftfahrzeugs.

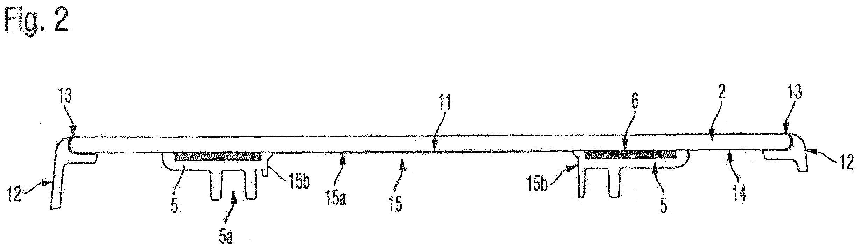

Eine Ausführungsform des erfindungsgemäßen Montageverfahrens wird mit Bezug auf die Figuren 2 bis 5 erläutert.

Bei dem in Figur 2 gezeigten Anordnungsschritt werden ein Trägerrahmen 5 und eine zumindest bereichsweise transparente Abdeckung 2 so angeordnet, dass der Trägerrahmen 5 unter Ausbildung eines durch den Trägerrahmen 5 und die Abdeckung 2 begrenzten Zwischenraums 6, welcher einen Hohlraum vorgibt, an die Abdeckung 2 angrenzt. Gleichzeitig bilden die Abdeckung 2 und der Trägerrahmen 5 aus faserverstärktem Thermoplast eine Wanne 15 aus, die der Aufnahme der in Figur 2 nicht gezeigten Pixelmatrixanzeige dient. Der den Hohlraum bildende Zwischenraum 6 erstreckt sich um die Wanne 15 und umschließt diese vollständig. Der Trägerrahmen 5 weist einen zentralen Durchbruch auf, so dass der den Durchbruch umlaufend umgebende Trägerrahmen 5 eine dem Durchbruch zugewandte Innenwand 15b der Wanne 15 definiert, während ein Boden 15a der Wanne 15 durch die Abdeckung 2 ausgebildet wird. Die Abdeckung 2 ist ein Einscheibensicherheitsglas, d.h. ein Temperglas nach EN 12150-1, oder ein Verbundglas. Eine zur ortsaufgelösten, kapazitiven Berührdetektion vorgesehene transparente Elektrodenstruktur 11 ist Bestandteil der Abdeckung 2 und ist als Beschichtung eines transparenten Foliensubstrats auf der der Pixelmatrixanzeige 3 zugewandten Oberfläche 14 der Glasschicht der Abdeckung 2 aufgebracht.

Der Trägerrahmen 5 ist zur Festlegung der Anzeigeanordnung 1 an einer Kraftfahrzeugkarosserie, hier der B-Säule einer Kraftfahrzeugkarosserie bestimmt und ausgebildet. In einem dem Anordnen nachfolgenden Schritt erfolgt ein in Figur 2 bereits gezeigtes Einspritzen eines thermoplastischen Elastomers in den durch den Zwischenraum 6 definierten Hohlraum, um diesem mit dem thermoplastischen Elastomer vollständig zu verfüllen. Durch nachfolgendes Verfestigen des thermoplastischen Elastomers wird der Trägerrahmen 5 an der Abdeckung 2 durch stoffschlüssige Verbindung festgelegt, während eine nach dem Verfestigen dauerhaft verbleibende Restelastizität für eine dauerhafte und robuste Verbindung mit Dichtwirkung zwischen der Abdeckung 2 und dem Trägerrahmen 5 sorgt. Gleichzeitig wird mittels des thermoplastischen Elastomers weitere Zier- und/oder Befestigungselemente 12 an der Abdeckung aber außerhalb der Wanne 15 festgelegt. Diese Zier- und/oder Befestigungselemente 12 dienen hier der Spaltverblendung an der B-Säule des Kraftfahrzeugs.

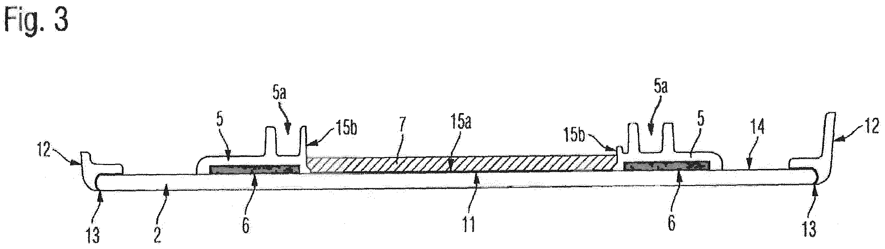

In einem nachfolgenden in Figur 3 gezeigten Schritt folgt ein Füllen der Wanne 15 mit einem transparent härtenden Flüssigklebstoff unter Ausbildung einer Klebstoffschicht 7, wobei spätestens die dichtende Wirkung des thermoplastischen Elastomers in dem Zwischenraum 6 ein Verlust an Flüssigklebstoff verhindert. Bei dem Flüssigklebstoff handelt es sich beispielsweise um einen Flüssigklebstoff auf Acrylatbasis oder um einen 2-Komponenten-Silikon-Klebstoff.

Dabei benetzt beim Füllen der Wanne 15 mit dem Flüssigklebstoff der Flüssigklebstoff den Trägerrahmen 5, nämlich die durch ihn ausgebildete Innenwand 15b der Wanne 15, allseitig, da die Menge des eingebrachten Flüssigklebstoffs so gewählt ist, dass beim Verteilen des Flüssigklebstoffs in der Wanne 15 ein im Wesentlichen gleichmäßiger Füllstand in der Wanne 15 bis zur allseitigen Benetzung der Innenwand 15b der Wanne 15 erreicht ist und die transparente Klebstoffschicht 7 ausgebildet wird.

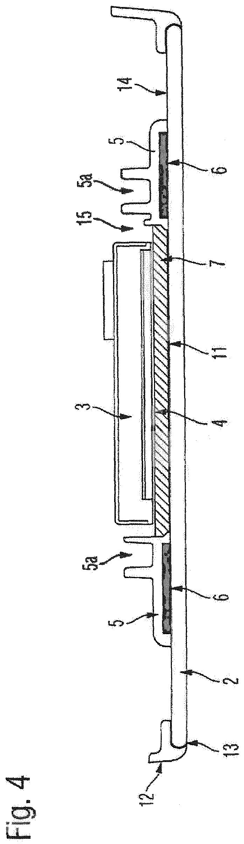

Nachfolgend erfolgt ein in Figur 4 gezeigtes Einbringen der Pixelmatrixanzeige 3 in die Wanne 15, wobei die Anzeigefläche 4 der Klebstoffschicht 7 zugewandt ist und von dem Flüssigklebstoff der Klebstoffschicht 7 vollflächig benetzt wird. Beim nachfolgenden Härten der Klebstoffschicht durch chemisches oder physikalisches Vernetzen des Flüssigklebstoffs wird erreicht, dass einerseits die Pixelmatrixanzeige 3 über die Anzeigefläche 4 an der Abdeckung 2 festgelegt ist und andererseits die Anzeigefläche 4 durch die Abdeckung 2 und die Klebstoffschicht 4 sichtbar ist. Dabei ist die Pixelmatrixanzeige 3 ausschließlich über die Anzeigefläche 4 festgelegt, d.h. ist somit "freihängend" an der Abdeckung 2 festgelegt.

Dadurch, dass der Trägerrahmen 5 der Festlegung der Anzeigeanordnung 1 an der Fahrzeugkarosserie dient, wird bei einer Krafteinwirkung auf die Abdeckung 2 dafür gesorgt, dass die Pixelmatrixanzeige 3 außerhalb des Kraftflusses angeordnet ist. Es wird ein mechanisches Einspannen der Pixelmatrixanzeige 3 zwischen der Abdeckung 2 und der Kraftfahrzeugkarosserie verhindert. Somit ist eine Beschädigung der Pixelmatrixanzeige 3 weitgehend ausgeschlossen.

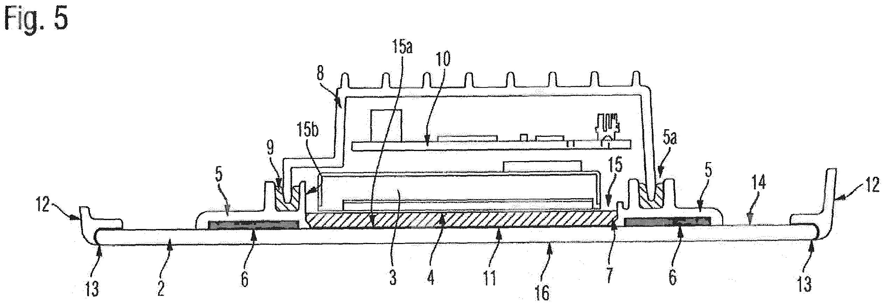

In einem dem Härten nachfolgenden, in Figur 5 gezeigten Schritt wird ein Gehäuse 8 an dem Trägerrahmen 5 festgelegt. Dabei übergreift das Gehäuse 8 die Pixelmatrixanzeige 3 und eine auf einer Leiterplatte 10 angeordnete Auswertelektronik, Das Gehäuse 8 ist über Dichtmittel 9 und nicht gezeigte Rastmittel an dem Trägerrahmen 5 festgelegt. Das Dichtmittel 9 ist eine Schicht aus einem thermoplastischen Elastomer, die auf den Flanken einer Nut 5a des Trägerrahmens 5 vorgesehen ist und dient der Vermeidung des Eindringens von Fremdkörpern oder Fluiden. Das Dichtmittel 9 und der Trägerrahmen 5 werden in einem 2K-Spritzverfahren in einem formgebenden Extrusionsschritt unter Herstellung einer stoffschlüssigen Verbindung zwischen den beiden hergestellt. Das Gehäuse 8 dient dem mechanischen Schutz der Pixelmatrixanzeige 3 und der ferner darunter befindlichen Auswertelektronik.

## Patentansprüche

1. Verfahren zur Montage einer Anzeigeanordnung (1):
anordnen eines Trägerrahmens (5) und einer zumindest bereichsweise transparenten Abdeckung (2) derart, dass der Trägerrahmen (5) unter Ausbildung eines durch den Trägerrahmen (5) und die Abdeckung (2) begrenzten und einen Hohlraum definierenden Zwischenraums (6) an die Abdeckung (2) angrenzt und die Abdeckung (2) und der Trägerrahmen (5) eine Wanne (15) zur Aufnahme einer eine Anzeigefläche (4) aufweisenden Pixelmatrixanzeige (3) ausbilden; wobei derTrägerrahmen(5) zur Festlegung der Anzeigeanordnung (1) an einer tragenden Konstruktion, insbesondere an einer Kraftfahrzeugkarosserie, ausgebi det ist, **gekennzeichnet durch**
einspritzen eines thermoplastischen Elastomers in den Zwischenraum (6);
verfestigen des thermoplastischen Elastomers, um den Trägerrahmen (5) an der Abdeckung (2) festlegen;
füllen der Wanne (15) mit einem transparent härtenden Flüssigklebstoff unter Ausbildung einer Klebstoffschicht (7);
einbringen der Pixelmatrixanzeige (3) in die Wanne (15), wobei die Anzeigefläche (4) der Kiebstoffschicht (7) zugewandt ist und durch den Flüssigklebstoff der Klebstoffschicht (7) vollflächig benetzt wird und die Anzeigefläche (4) durch die Abdeckung (2) und die Klebstoffschicht (7) sichtbar ist;
härten der Klebstoffschicht (7), um eine Festlegung der Pixelmatrixanzeige (3) über die Klebstoffschicht (7) an der Abdeckung (2) zu bewirken.

2. Verfahren gemäß Anspruch 1, mit einem dem Härten nachfolgenden Schritt, bei dem ein die Pixelmatrixanzeige (3) übergreifendes Gehäuse (8) an dem Trägerrahmen (5) festgelegt wird.

3. Verfahren gemäß dem vorhergehenden Anspruch, wobei zwischen dem Gehäuse (8) und dem Trägerrahmen (5) ein Dichtmittel (9) vorgesehen ist.

4. Verfahren gemäß einem der beiden vorhergehenden Ansprüche, wobei das Gehäuse (8) durch Rastmittel am Trägerrahmen (5) festgelegt wird.

5. Verfahren gemäß einem der vorhergehenden Ansprüche, wobei der Zwischenraum (6) die Wanne (15) umlaufend ausgebildet ist.

6. Verfahren gemäß einem der vorhergehenden Ansprüche, wobei wenigstens ein weiteres Zier- und/oder Befestigungselement (12) außerhalb der Wanne (15) mittels einer beim Einspritzen und Verfestigen ausgebildeten Schicht (13) aus dem thermoplastischen Elastomer an der Abdeckung (2) festgelegt wird.

7. Verfahren gemäß einem der vorhergehenden Ansprüche, wobei die Abdeckung (2) einen Glaswerkstoff aufweist.

8. Verfahren gemäß einem der vorhergehenden Ansprüche, wobei der Trägerrahmen (5) aus einem Kunststoff, wie einem Thermoplast, bevorzugt einem faserverstärkten Kunststoff, hergestellt ist.

9. Verfahren gemäß einem der vorhergehenden Ansprüche, wobei beim Füllen der Wanne (15) mit dem Flüssigklebstoff dieser den Trägerrahmen (5) benetzt.

10. Verfahren gemäß einem der vorhergehenden Ansprüche, wobei der Trägerrahmen (5) in einem Spritzformverfahren, bevorzugt in einem 2K-Spritzformverfahren, hergestellt wird.

11. Verfahren gemäß einem der vorhergehenden Ansprüche, wobei in einem letzten Schritt der Trägerrahmen (5) an einer Kraftfahrzeugkarosserie festgelegt wird, ohne dass die Pixelmatrixanzeige (3) einen Berührkontakt mit der Kraftfahrzeugkarosserie aufweist.

12. Anzeigeanordnung (1), aufweisend:
eine zumindest bereichsweise transparente Abdeckung (2);
ein Trägerrahmen (5), der zur Festlegung der Anzeigeanordnung (1) an einer tragenden Konstruktion, insbesondere an einer Kraftfahrzeugkarosserie, ausgebildet ist;
eine eine Anzeigefläche (4) aufweisende Pixelmatrixanzeige (3);
ein optionales Gehäuse (8);
wobei der Trägerrahmen (5) angrenzend an die Abdeckung (2) angeordnet ist und ein durch den Trägerrahmen (5) und die Abdeckung (2) begrenzter Zwischenraum (6) ausgebildet ist, welcher mit einem thermoplastischen Elastomer verfüllt ist, um den Trägerrahmen (5) an der Abdeckung (2) festzulegen;
wobei die Abdeckung (2) und der Trägerrahmen (5) eine Wanne (15) ausbilden, in der die Pixelmatrixanzeige (3) aufgenommen ist; **dadurch gekennzeichnet dass** in der Wanne (15) eine transparente Klebstoffschicht (7) zwischen der Anzeigefläche (4) und der Abdeckung (2) ausgebildet ist, um die Pixelmatrixanzeige (3) an der Abdeckung (2) festzulegen, wobei die Anzeigefläche (4) durch die Abdeckung (2) und die Klebstoffschicht (7) sichtbar ist; wobei das optionale Gehäuse (8) die Pixelmatrixanzeige (3) übergreift und am Trägerrahmen (5) festgelegt ist.

13. Anzeigeanordnung (1) gemäß dem vorhergehenden Anspruch, wobei zwischen dem optionalen Gehäuse (8) und dem Trägerrahmen (5) ein Dichtmittel (9) vorgesehen ist.

14. Anzeigeanordnung (1) gemäß einem der beiden vorhergehenden Ansprüche 12 und 13, wobei wenigstens ein weiteres, außerhalb der Wanne angeordnetes Zier- und/oder Befestigungselement (12) mittels einer Schicht (13) aus thermoplastischem Elastomer an der Abdeckung (2) festgelegt ist.

15. Anzeigeanordnung (1) gemäß einem der vorhergehenden Ansprüche 12 bis 14, wobei die Abdeckung (2) einen Glaswerkstoff aufweist.

16. Anzeigeanordnung (1) gemäß einem der vorhergehenden Ansprüche 12 bis 15, wobei der Trägerrahmen (5) aus einem Kunststoff, wie einem Thermoplast, bevorzugt einem faserverstärkten Kunststoff, hergestellt ist.

17. Anzeigeanordnung (1) gemäß einem der vorhergehenden Ansprüche 12 bis 16, wobei die Klebstoffschicht (7) an den Trägerrahmen (5) angrenzt.

18. Anzeigeanordnung (1) gemäß einem der vorhergehenden Ansprüche 12 bis 17, wobei das optionale Gehäuse (8) durch Rastmittel am Trägerrahmen (5) festgelegt ist.

19. Anzeigeanordnung (1) gemäß einem der vorhergehenden Ansprüche 12 bis 18, wobei der Zwischenraum (6) die Wanne (15) umlaufend ausgebildet ist.

20. Verwendung der Anzeigeanordnung (1) gemäß einem der vorhergehenden Ansprüche 12 bis 19 an einem Kraftfahrzeug, insbesondere in einem Außenbereich der Kraftfahrzeugkarosserie.

## Claims

1. Method for mounting a display arrangement (1):
arranging a support frame (5) and a cover (2) that is transparent at least in some regions in such a way that the support frame (5) is adjacent to the cover (2) while forming an intermediate space (6), which defines a hollow space and is delimited by the support frame (5) and the cover (2), and the cover (2) and the support frame (5) form a well (15) for accommodating a pixel matrix display (3) having a display surface (4); wherein the support frame (5) is designed for fixing the display arrangement (1) on a supporting structure, in particular on a motor vehicle body, **characterized by**
injecting a thermoplastic elastomer into the intermediate space (6);
solidifying the thermoplastic elastomer in order to fix the support frame (5) on the cover (2);
filling the well (15) with a transparently curing liquid adhesive to form an adhesive layer (7);
introducing the pixel matrix display (3) into the well (15), with the display surface (4) facing the adhesive layer (7) and being wetted over its entire surface area by the liquid adhesive of the adhesive layer (7) and the display surface (4) being visible through the cover (2) and the adhesive layer (7);
curing the adhesive layer (7) in order to bring about fixing of the pixel matrix display (3) on the cover (2) by way of the adhesive layer (7).

2. Method according to Claim 1, with a step following the curing process in which a housing (8) that fits over the pixel matrix display (3) is fixed on the support frame (5).

3. Method according to the preceding claim, wherein a sealant (9) is provided between the housing (8) and the support frame (5).

4. Method according to one of the two preceding claims, wherein the housing (8) is fixed on the support frame (5) by latching means.

5. Method according to one of the preceding claims, wherein the intermediate space (6) is formed peripherally around the well (15).

6. Method according to one of the preceding claims, wherein at least one further decorative and/or fastening element (12) is fixed on the cover (2) outside the well (15) by means of a layer (13) of the thermoplastic elastomer that is formed during the injecting and solidifying process.

7. Method according to one of the preceding claims, wherein the cover (2) comprises a glass material.

8. Method according to one of the preceding claims, wherein the support frame (5) is produced from a plastic, such as a thermoplastic, preferably a fibre-reinforced plastic.

9. Method according to one of the preceding claims, wherein, during the filling of the well (15) with the liquid adhesive, the liquid adhesive wets the support frame (5).

10. Method according to one of the preceding claims, wherein the support frame (5) is produced in an injection-moulding process, preferably in a 2-component injection-moulding process.

11. Method according to one of the preceding claims, wherein in a last step the support frame (5) is fixed on a motor vehicle body, without the pixel matrix display (3) having any touching contact with the motor vehicle body.

12. Display arrangement (1), having:
a cover (2) that is transparent at least in some regions;
a support frame (5), which is designed for fixing the display arrangement (1) on a supporting structure, in particular on a motor vehicle body;
a pixel matrix display (3) having a display surface (4);
an optional housing (8);
wherein the support frame (5) is arranged adjacent to the cover (2) and an intermediate space (6), which is delimited by the support frame (5) and the cover (2), is formed and is filled with a thermoplastic elastomer in order to fix the support frame (5) on the cover (2);
wherein the cover (2) and the support frame (5) form a well (15), in which the pixel matrix display (3) is accommodated; **characterized in that** a transparent adhesive layer (7) is formed in the well (15) between the display surface (4) and the cover (2) in order to fix the pixel matrix display (3) on the cover (2), with the display surface (4) being visible through the cover (2) and the adhesive layer (7); wherein the optional housing (8) fits over the pixel matrix display (3) and is fixed on the support frame (5).

13. Display arrangement (1) according to the preceding claim, wherein a sealant (9) is provided between the optional housing (8) and the support frame (5).

14. Display arrangement (1) according to one of the two preceding Claims 12 and 13, wherein at least one further decorating and/or fastening element (12) arranged outside the well is fixed on the cover (2) by means of a layer (13) of thermoplastic elastomer.

15. Display arrangement (1) according to one of the preceding Claims 12 to 14, wherein the cover (2) comprises a glass material.

16. Display arrangement (1) according to one of the preceding Claims 12 to 15, wherein the support frame (5) is produced from a plastic, such as a thermoplastic, preferably a fibre-reinforced plastic.

17. Display arrangement (1) according to one of the preceding Claims 12 to 16, wherein the adhesive layer (7) is adjacent to the support frame (5).

18. Display arrangement (1) according to one of the preceding Claims 12 to 17, wherein the optional housing (8) is fixed on the support frame (5) by latching means.

19. Display arrangement (1) according to one of the preceding Claims 12 to 18, wherein the intermediate space (6) is formed peripherally around the well (15).

20. Use of the display arrangement (1) according to one of the preceding Claims 12 to 19 on a motor vehicle, in particular in an outside area of the motor vehicle body.

## Revendications

1. Procédé de montage d'un ensemble d'affichage (1), ledit procédé comprenant les étapes suivantes :
disposer un cadre de support (5) et un couvercle (2) transparent au moins par zones de telle sorte que le cadre de support (5) soit adjacent au couvercle en ménageant un espace intermédiaire (6) qui est délimité par le cadre de support (5) et le couvercle (2) et qui définit une cavité (2) et le couvercle (2) et que le cadre de support (5) forme une cuvette (15) destinée à recevoir un élément d'affichage à matrice de pixels (3) pourvu d'une surface d'affichage (4) ; le cadre de support (5) étant conçu pour fixer l'ensemble d'affichage (1) à une structure porteuse, en particulier à une carrosserie de véhicule automobile, **caractérisé par** les étapes suivantes
injecter un élastomère thermoplastique dans l'espace intermédiaire (6) ;
solidifier l'élastomère thermoplastique afin de fixer le cadre de support (5) au couvercle (2) ;
remplir la cuvette (15) avec un adhésif liquide durcissant transparent pour former une couche adhésive (7) ;
introduire l'élément d'affichage à matrice de pixels (3) dans la cuvette (15), la surface d'affichage (4) étant dirigée vers la couche adhésive (7) et étant complètement mouillée par l'adhésif liquide de la couche adhésive (7) et la surface d'affichage (4) étant visible à travers le couvercle (2) et la couche adhésive (7) ;
faire durcir la couche adhésive (7) afin de fixer l'élément d'affichage à matrice de pixels (3) au couvercle (2) par le biais de la couche adhésive (7).

2. Procédé selon la revendication 1, comprenant une étape qui fait suite au durcissement et lors de laquelle un boîtier (8), qui s'engage par-dessus l'élément d'affichage à matrice de pixels (3), est fixé au cadre de support (5).

3. Procédé selon la revendication précédente, un moyen d'étanchéité (9) étant prévu entre le boîtier (8) et le cadre de support (5).

4. Procédé selon l'une des deux revendications précédentes, le boîtier (8) étant fixé au cadre de support (5) par des moyens d'encliquetage.

5. Procédé selon l'une des revendications précédentes, l'espace intermédiaire (6) étant ménagé de manière à s'étendre autour de la cuvette (15).

6. Procédé selon l'une des revendications précédentes, au moins un autre élément de décoration et/ou de fixation (12) étant fixé au couvercle (2) à l'extérieur de la cuvette (15) au moyen d'une couche (13) d'élastomère thermoplastique formée lors de l'injection et de la solidification.

7. Procédé selon l'une des revendications précédentes, le couvercle (2) comportant une matière vitreuse.

8. Procédé selon l'une des revendications précédentes, le cadre de support (5) étant fabriqué à partir d'une matière synthétique, telle qu'une matière thermoplastique, de préférence une matière synthétique renforcée de fibres.

9. Procédé selon l'une des revendications précédentes, l'adhésif liquide mouillant le cadre de support (5) lors du remplissage de la cuvette (15).

10. Procédé selon l'une des revendications précédentes, le cadre de support (5) étant fabriqué dans un procédé de moulage par injection, de préférence dans un procédé de moulage par injection à deux composants.

11. Procédé selon l'une des revendications précédentes, dans une dernière étape le cadre de support (5) étant fixé à une carrosserie de véhicule automobile sans que l'élément d'affichage à matrice de pixels (3) ne vienne en contact avec la carrosserie de véhicule automobile.

12. Ensemble d'affichage (1), comprenant :
un couvercle (2) qui est transparent au moins par zones ;
un cadre de support (5) qui est conçu pour fixer l'ensemble d'affichage (1) à une structure porteuse, en particulier à une carrosserie de véhicule automobile ;
un élément d'affichage à matrice de pixels (3) pourvu d'une surface d'affichage (4) ;
un boîtier optionnel (8) ;
le cadre de support (5) étant disposé de manière adjacente au couvercle (2) et un espace intermédiaire (6) étant ménagé qui est délimité par le cadre de support (5) et le couvercle (2) et qui est rempli d'un élastomère thermoplastique afin de fixer le cadre de support (5) au couvercle (2) ; le couvercle (2) et le cadre de support (5) formant une cuvette (15) dans laquelle l'élément d'affichage à matrice de pixels (3) est reçu ; **caractérisé en ce qu'**une couche adhésive transparente (7) est formée dans la cuvette (15) entre la surface d'affichage (4) et le couvercle (2) afin de fixer l'élément d'affichage à matrice de pixels (3) au couvercle (2), la surface d'affichage (4) étant visible à travers le couvercle (2) et la couche adhésive (7) ; le boîtier optionnel (8) s'engageant par-dessus l'élément d'affichage à matrice de pixels (3) et étant fixé au cadre de support (5).

13. Ensemble d'affichage (1) selon la revendication précédente, un moyen d'étanchéité (9) étant prévu entre le boîtier optionnel (8) et le cadre de support (5).

14. Ensemble d'affichage (1) selon l'une des deux revendications précédentes 12 et 13, au moins un autre élément de décoration et/ou de fixation (12), disposé à l'extérieur de la cuvette, étant fixé au couvercle (2) au moyen d'une couche (13) d'élastomère thermoplastique.

15. Ensemble d'affichage (1) selon l'une des revendications précédentes 12 à 14, le couvercle (2) étant en une matière vitreuse.

16. Ensemble d'affichage (1) selon l'une des revendications précédentes 12 à 15, le cadre de support (5) étant fabriqué à partir d'une matière synthétique, telle qu'une matière thermoplastique, de préférence une matière synthétique renforcée de fibres.

17. Ensemble d'affichage (1) selon l'une des revendications précédentes 12 à 16, la couche adhésive (7) étant adjacente au cadre de support (5).

18. Ensemble d'affichage (1) selon l'une des revendications précédentes 12 à 17, le boîtier optionnel (8) étant fixé au cadre de support (5) par un moyen d'encliquetage.

19. Ensemble d'affichage (1) selon l'une des revendications précédentes 12 à 18, l'espace intermédiaire (6) étant conçu de manière à s'étendre autour de la cuvette (15).

20. Utilisation de l'ensemble d'affichage (1) selon l'une des revendications précédentes 12 à 19 sur un véhicule automobile, notamment dans une zone extérieure de la carrosserie de véhicule automobile.
